Europäisches Patentamt

European Patent Office

Office européen des brevets

(19)

(11) EP 0 873 036 A2

(12) EUROPÄISCHE PATENTANMELDUNG

(43) Veröffentlichungstag:
21.10.1998 Patentblatt 1998/43

(51) Int Cl.⁶: H04Q 11/04, H04L 12/433

(21) Anmeldenummer: 98201123.1

(22) Anmeldetag: 08.04.1998

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 16.04.1997 DE 19715797

(71) Anmelder:
• Philips Patentverwaltung GmbH
22335 Hamburg (DE)
Benannte Vertragsstaaten:
DE
• Koninklijke Philips Electronics N.V.
5621 BA Eindhoven (NL)
Benannte Vertragsstaaten:
FR GB

(72) Erfinder:
• Du, Yongang, Dr.-Ing.
Röntgenstrasse 24, 22335 Hamburg (DE)
• Van Wageningen, Andries, Dipl.-Ing.
Röntgenstrasse 24, 22335 Hamburg (DE)
• Kraemer, Rolf, Dr.-Ing.
Röntgenstrasse 24, 22335 Hamburg (DE)

(74) Vertreter: Volmer, Georg, Dipl.-Ing. et al
Philips Patentverwaltung GmbH,
Röntgenstrasse 24
22335 Hamburg (DE)

(54) Lokales Netzwerk mit Port Extender

(57) Die Erfindung betrifft ein lokales, nach dem asynchronen Transfermodus (ATM) arbeitendes Netzwerk, insbesondere uni- oder bidirektionales Ringnetzwerk, mit mehreren Stationen (1-4) und diesen und/oder weiteren Netzwerken mit weiteren Stationen (9-11) zugeordneten Netzwerkschnittstelleneinheiten mit Sende- und Empfangseinrichtungen (ATM - Transceiver) (5-8), die jeweils einen Sende- und Empfangs-Ringanschluß aufweisen, wobei der Verbindungsaufbau (Signalisierung) zwischen den Stationen über den Austausch von ATM-Zellen erfolgt, in deren Kopffeld (header) logische Verbindungskennungen (VPI, virtual path identifier und VCI, virtual channel identifier) niedergelegt sind. Zur Erhöhung der Vielfalt der Anschlußmöglichkeiten bei gleichzeitiger Vermeidung von ATM-Zellen-Interleaving während der Signalisierungsphase ist erfindungsgemäß vorgesehen, daß mindestens eine Netzwerkschnittstelleneinheit (5) zusätzlich einen Multiplexer/ Demultiplexer (20) aufweist, über welchen mindestens zwei Stationen (1a,1b,1c) gemeinsam an die Netzwerkschnittstelleneinheit (5) angeschlossen sind, und daß dem Multiplexer/Demultiplexer (20) Umsetzungsmittel zum reversiblen Umsetzen der Verbindungskennung (VPI- und/oder VCI-) in eine schnittstellenintern die einzelnen Stationen der Netzwerkschnittstelleneinheit unterscheidende Kennung zugeordnet sind.

Fig.3

**Beschreibung**

Die Erfindung betrifft ein lokales, nach dem asynchronen Transfermodus (ATM) arbeitendes Netzwerk, insbesondere ein uni- oder bidirektionales Ringnetzwerk, mit mehreren Stationen und diesen und/oder weiteren Netzwerken mit weiteren Stationen zugeordneten Netzwerkschnittstelleneinheiten mit Sende- und Empfangseinrichtungen (ATM-Transceiver), wobei der Verbindungsaufbau (Signalisierung) zwischen den Stationen über den Austausch von ATM-Zellen erfolgt, in deren Kopffeld (header) logische Verbindungskennungen (VPI, virtual path identifier und VCI, virtual channel identifier) niedergelegt sind und wobei der Informationsaustausch digital über ATM-Zellen erfolgt, in deren Kopffeld (header) Adressinformationen, insbesondere Bündelkennungen (VPI, virtual path identifier) und Verbindungkennungen (VCI, virtual channel identifier), niedergelegt sind.

Die Erfindung betrifft darüber hinaus eine für die Verwendung in einem solchen Netzwerk geeignete ATM-Zelle sowie eine Netzwerkschnittstelleneinheit für ein solches lokales Netzwerk und schließlich ein Verfahren zur Signalisierung in einem solchen Netzwerk.

Die ATM-Technik findet Einsatz bei unterschiedlichen Übermittlungsdiensten, wie Datenübermittlungsdiensten, Sprachübermittlungsdiensten, Videodiensten (z.B. Videokonferenzen, Videodatenbanken) oder bei der Übermittlung von Multimedia-Informationen, bei denen Sprachen-, Daten- und Videoinformationen miteinander kombiniert sind.

In einem lokalen Netzwerk, welches nach dem asynchronen Transfermodus (ATM) arbeitet, werden aus den zu übertragenden Informationen (Nachrichten) Blöcke fester Länge gebildet. Jeder Block wird mit einer zusätzlichen Steuerinformation zu einer Übertragungseinheit ergänzt, die als ATM-Zelle bezeichnet sind. Eine ATM-Zelle setzt sich somit zusammen aus einem Zellenkopf (header) und einem Informationsfeld (payload), in dem die zu übertragenden Informationen enthalten sind.

Bei ATM werden auf jedem Übertragungsabschnitt ununterbrochen Zellen übertragen. Ist gerade keine Nutzinformation zu senden, so werden speziell markierte Leerzellen gesendet. Damit werden die ATM-Nutzzellen zeitlich voneinander unabhängig übertragen, da die zeitlichen Abstände auf der Leitung zwischen benachbarten Nutzzellen in der Regel unterschiedlich sind. Diese Art der Übertragung bezeichnet man daher als asynchron. Damit stellt ATM eine asynchrone Übertragung von Nutzzellen fester Länge dar.

Bei den Nutzzellen wird unterschieden zwischen Anwenderzellen (user cells), die in ihrem Informationsfeld z.B. Nachrichten oder Daten des Benutzers einer zuvor aufgebauten Verbindung enthalten, und Kontrollzellen, die in ihrem Informationsfeld Steuerungsinformationen, z.B. für die Steuereinheit einer Netzwerkschnittstelleneinheit, enthalten.

Bei ATM-Netzen wird die verfügbare Übertragungskapazität (Bandbreite) eines Breitbandkanals in sog. virtuelle Pfade (virtual path) unterteilt. Ein virtueller Pfad repräsentiert wiederum eine Gruppe von virtuellen Kanälen (virtual channel). Beim Aufbau einer virtuellen Verbindung zwischen einem Sender und einem Empfänger wird zunächst der geeignete virtuelle Pfad ausgewählt. Anschließend wird ein Teil der Bandbreite als virtueller Kanal dieses Pfades belegt. Für die Identifizierung des virtuellen Kanals wird die Kennung VCI (virtual channel identifier) verwendet. Für die Identifizierung der Pfade wird die Kennung VPI (virtual path identifier) verwendet. Damit läßt sich jede übertragene Zelle eindeutig zuordnen, da die Kombination VPI/VCI die logische Kennung für die festgelegte Verbindung darstellt.

Aus der EP 0 614 296 A2 ist ein lokales ATM-Netzwerk der eingangs genannten Art bekannt, bei welchem als Nutzzellen sowohl Anwenderzellen als auch Kontrollzellen verarbeitet werden. Jeder Netzwerkschnittstelleneinheit, die als wesentliche Baugruppe eine Sende- und Empfangseinrichtung (ATM-Transceiver) enthält, ist eine Station zugeordnet. Die Anwenderzellen enthalten die eigentliche Information, z.B. Nachrichten oder Daten des Benutzers dieser Verbindung. Wenn eine virtuelle Verbindung beispielsweise zur Übertragung von Sprachsignalen (Telefongespräch) benutzt wird, enthält das Informationsfeld der Anwenderzelle Sprachdaten.

Demgegenüber enthält eine Kontrollzelle in ihrem Informationsfeld Steuerungsinformationen, die beispielsweise für die Ring-interne Koordination der Vermittlungsfunktion benötigt werden, insbesondere um eine Verbindung aufzubauen (Signalisierungsphase) oder nach der Informationsübertragung wieder abzubauen. Andererseits werden auch Kontrollzellen benötigt, um Steuerunginformationen zwischen einer Station und dem Netz zu übertragen. In diesem Fall hat die Kontrollzelle ebenso wie die Anwenderzelle einen vom UNI/NNI Standard vorgeschriebenen Aufbau und eine solche Zelle wird im folgenden als Signalisierungszelle bezeichnet.

Bei ATM- Netzwerken erfolgt der Verbindungsaufbau (Signalisierung) üblicherweise folgendermaßen:

Bei einem Verbindungswunsch einer Sendestation mit einer Empfangsstation wird zuerst eine standardisierte Signalisierungszelle mit einem Verbindungswunsch erzeugt und über die der Sendestation zugeordnete Netzwerkschnittstelleneinrichtung zu einer zentralen Netzwerkschnittstelleneinrichtung (sog. "call handler") übertragen. Der Call Handler prüft, ob die gewünschte Verbindung möglich ist. Wenn dies der Fall ist, wird dieser virtuellen Verbindung ein gültiger VPI und VCI zugewiesen. Mittels Signalisierungszellen teilt der Call Handler den Steueranordnungen der involvierten Netzwerkschnittstelleneinrichtungen mit, daß eine virtuelle Verbindung zwischen Sende- und Empfangsstation aufgebaut ist. Anschließend erfolgt der Verbindungsaufbau und die Übertragung der Information. Der Abbau der Verbindung erfolgt entsprechend.

Aus der US 5 600 795 ist ein nach dem asynchronen Transfermodus ATM arbeitendes lokales Netzwerk bekannt, bei dem der Verbindungsaufbau in ähnlicher Weise erfolgt. Auch bei diesem Netzwerk ist jeder Station eine eigene Netzwerkschnittstelleneinheit zugeordnet.

Aus "Telekommunkation aktuell, ATM Anwendungen, Multimediakommunikation über Datenautobahnen, VDE Verlag GmbH 1995", Seiten 11-16, ist der grundsätzliche Aufbau von ATM-Zellen nach dem vorgeschriebenen ATM-Standard bekannt. Demnach besteht die ATM-Zelle aus einem Informationsteil einer Länge von 48 Byte und einem Kopfteil (header) einer Länge von 5 Byte. Der Zellenkopf ist dabei unterschiedlich strukturiert, je nachdem, ob es sich um eine ATM-Zelle handelt, die über eine Schnittstelle zwischen einer Station und dem Netzwerk (UNI, user network interface) oder zwischen zwei unterschiedlichen Netzwerken (NNI, network network interface) übertragen wird.

Wenn es sich um eine UNI-Nutzzelle handelt, bilden die ersten vier Bits des Zellenkopfes die GFC-Funktion (generic flow control). Diese ermöglicht es, Überlastsituationen im Netz aufgrund der Überschreitung vorgegebener Bandbreiten zu verhindern. Anschließend folgt eine Bitfolge von 8 Bits VPI und 16 Bits VCI zur Definition des virtuellen Kanals bzw. des virtuellen Pfades. Die nachfolgenden Informationen der Kopfzelle beziehen sich auf die Art der Zelle (PT, payload type), mit der in diesem Stand der Technik unterschieden wird zwischen Anwenderzellen und Signalisierungszellen. Weitere Informationen werden durch die Zellenverlustpriorität (CLP, cell loss priority) und die Zellenkopfprüfsumme (HEC, header error control) vorgenommen. Die letztgenannten Bereiche PT, CLP, HEC sind bei UNI/NNI-Zellen identisch. Demgegenüber unterscheidet sich die NNI-Zelle von der UNI-Zelle dadurch, daß anstelle des bei der UNI-Zelle vorgesehenen GFC-Bereiches der Bereich für die Pfadkennung (VPI) von 8 auf 12 Bit ausgedehnt ist.

Bei einem solchen ATM-Netzwerk, bei dem jeder Netzwerkschnittstelleneinheit eine Station zugeordnet ist, erfolgt der UNI Verbindungsaufbau über einen ständigen virtuellen Kanal mit standardisierten VPI & VCI Werten für alle Stationen, die an das Netzwerk angeschlossen sind. Insbesondere schreibt die UNI Norm vor, daß für die Signalisierungsphase die Werte zu VPI=0 und VCI=5 festgelegt werden. Da verschiedene Stationen auch mit unterschiedlichen UNI Verarbeitungseinrichtungen (processing entities) verbunden sind, kommt es zu keiner Daten- bzw. Zellenüberschneidung.

Der Erfindung liegt davon ausgehend die Aufgabe zugrunde, die Variabilität des Netzwerkes zu erhöhen.

Diese Aufgabe wird erfindungsgemäß bei einem Netzwerk der eingangs genannten Art bzw. einer Netzwerkschnittstelleneinheit der eingangs genannten Art, dadurch gelöst, daß mindestens eine Netzwerkschnittstelleneinheit zusätzlich einen Multiplexer/Demultiplexer aufweist, über welchen mindestens zwei Stationen gemeinsam an die Netzwerkschnittstelleneinheit angeschlossen sind, und daß dem Multiplexer/Demultiplexer Umsetzungsmittel zugeordnet sind zum reversiblen Umsetzen der Verbindungskennung (VPI- und/oder VCI-) in eine schnittstellenintern die einzelnen Stationen der Netzwerkschnittstelleneinheit unterscheidende Kennung.

Diese Aufgabe wird auch gelöst durch eine ATM-Zelle zur Verwendung in einem uni- oder bidirektionalen Ringnetzwerk, bestehend aus einem Kopffeld (header), in welchem eine vorgegebene Anzahl von Datenbytes für logische Verbindungskennungen (VPI, virtual path identifier und VCI, virtual channel identifier) enthalten sind, und einem Informationsfeld (payload), in dem eine weitere vorgegebene Anzahl von Datenbytes für die zu übertragene Nutzlast enthalten sind, wobei für die Signalisierung in einem Netzwerk, welches mindestens eine Netzwerkschnittstelleneinheit aufweist, der mindestens zwei Stationen gemeinsam zugeordnet sind, im Kopffeld der ATM-Zelle mindestens ein Teil der für die Verbindungskennung (VPI/VCI) belegten Datenbits schnittstellenintern für eine die Stationen unterscheidende Kennung modifiziert werden.

Die Erfindung zeichnet sich dadurch aus, daß mehrere Stationen mit einer einzigen Netzwerkschnittstelleneinheit verbunden sind, d.h. daß die bereits die Sende- und Empfangseinrichtung enthaltende Netzwerkschnittstelleneinheit zusätzlich einen durch Multiplexer/Demultiplexer gebildeten Port Extender enthält. Das bedeutet, daß eine Netzwerkschnittstelleneinheit nun mehrere Stationen bedient, so daß sich vorteilhaft eine entsprechende Vielfalt in den Anschlußmöglichkeiten für die Stationen ergibt. Gleichzeitig vermeidet die erfindungsgemäße Lösung auch ein Überlappen (interleaving) von Signalisierungszellen, die für unterschiedliche Stationen bestimmt sind bzw. von unterschiedlichen Stationen stammen. Ein solches Verhalten würde prinzipiell dann eintreten, wenn alle am selben Port Extender angeschlossenen Stationen gleichzeitig Pakete von UNI Signalisierungszellen auf demselben Kanal senden. Ein solches Überlappen würde zu einer falschen Prüfsummenbildung bei der Prüfsummenermittlung (CRC, cyclic redundancy check) führen, was zur Folge hätte, daß das zugehörige Paket von ATM-Zellen von der in der Netzwerkschnittstelleneinheit angeordneten reassambly unit zu löschen wäre. Zur Vermeidung dieses Nachteils sieht die Erfindung vor, daß anstelle des gemeinsamen UNI Signalisierungskanals für alle Stationen ein individueller Signalisierungskanal für jede einzelne Station definiert wird. Hierdurch ergibt sich eine eindeutige Zuordnung zu dem Port, an dem die jeweilige Station angeschlossen ist. Diese die einzelnen Stationen unterscheidende Kennung wird über die Umsetzungsmittel im Port Extender beim Eintreten der ATM-Zellen aus der jeweiligen Station bewirkt bzw. und bei deren Austreten in die Station wieder zurückgesetzt, so daß außerhalb der Schnittstelle zwischen Port Extender und den Stationen stets der UNI Standard eingehalten wird, während netzwerkschnittstellenintern eine eindeutige Zuordnung zu den mehreren Stationen gewährleistet ist.

Bevorzugte Ausführungsformen sind in den Unteransprüchen dargestellt. Die einfachste Lösungsmöglichkeit ergibt sich dadurch, daß dem vom UNI Format vorgegebenen VCI Wert, beispielsweise VCI=5, eine den Anschluß-Port der Station kennzeichnende Kennziffer hinzuaddiert wird, so daß jede Station netzschnittstellenintern unterschiedliche VCI Werte erhält.

Eine weitere bevorzugte Ausführungsform sieht vor, daß zusätzlich zu der hinzuaddierten den Anschluß-Port kennzeichnenden Kennziffer eine konstante additive Größe hinzugeführt wird. Diese hat die Wirkung eines "Offset", um sicherzustellen, daß der modifizierte VCI-Wert für alle Stationen in einem nichtbelegten Bereich ist.

Die Erfindung wird im folgenden anhand von Zeichnungen, die ein Ausführungsbeispiel zeigen, näher erläutert. Dabei zeigen im einzelnen:

Fig. 1　　ein lokales, nach dem asynchronen Transfermodus (ATM) arbeitendes Netzwerk, wie es nach seinem grundsätzlichen Aufbau aus dem Stand der Technik bekannt ist,

Fig. 2　　ein anderes, nach seinem grundsätzlichen Aufbau aus dem Stand der Technik bekanntes lokales nach dem asynchronen Transfermodus ATM arbeitendes Netzwerk,

Fig. 3　　ein lokales ATM Netzwerk gemäß Ausführungsbeispiel der Erfindung,

Fig. 4　　Erläuterungsskizzen zum Aufbau von ATM-Zellen, wobei

Fig. 4a　　den Gesamtaufbau einer bekannten ATM-Zelle,

Fig. 4b　　den ATM-Zellenkopfbereich nach dem UNI-Standard,

Fig. 4c　　den ATM-Zellenkopfbereich nach dem NNI-Standard und

Fig. 4d　　den grundsätzlichen Aufbau des ATM-Zellenkopfbereichs während der Signalisierungsphase gemäß Ausführungsbeispiel der Erfindung darstellen.

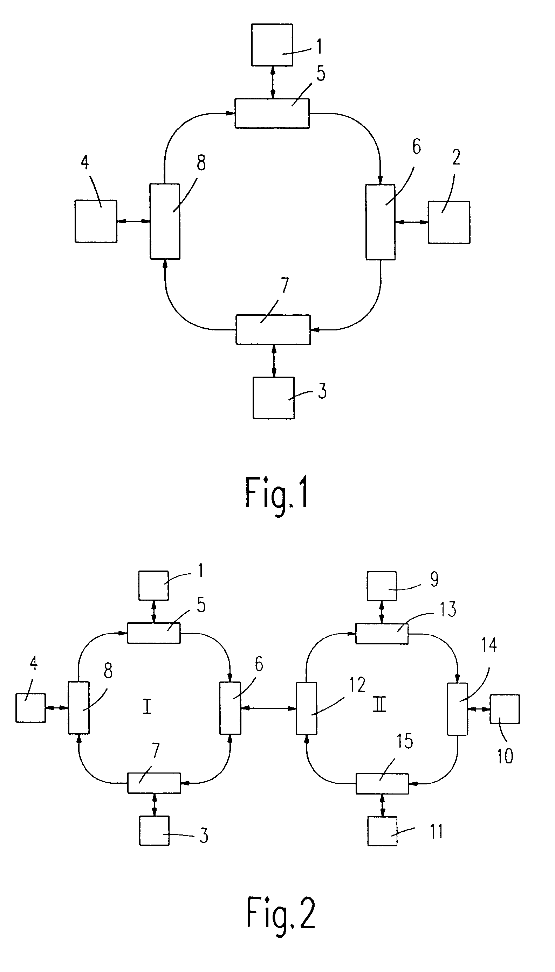

Das in Fig. 1 dargestellte, hinsichtlich seines grundsätzlichen Aufbaus aus dem Stand der Technik bekannte lokale nach dem asynchronen Transfermodus ATM arbeitende Netzwerk sieht vier Stationen 1-4 vor, die über jeweils eine Netzwerkschnittstelleneinheit 5-8 an ein Ringnetzwerk angeschlossen sind. Jede der Netzwerkschnittstelleneinheiten 5-8 enthält eine Sende-Empfangseinrichtung (ATM-Transceiver). Die Datenverbindung zwischen einer der Stationen 1-4 zu einer Empfangsstation innerhalb des Netzwerks erfolgt jeweils nach dem ATM-Übertragungsverfahren. Hierzu weist jede Netzwerkschnittstelleneinheit 5-8 Sende-und Empfangsringverbindungen auf, die zur Übertragung von Zellen vorgesehen sind. Jede Netzwerkschnittstelleneinheit 5-8 weist eine (nicht näher dargestellte) Koppelvorrichtung auf, die über Pufferspeicher mit den Ringverbindungen und der Station gekoppelt ist und den Zellenstrom weitervermittelt. Einzelheiten des Aufbaus einer solchen Netzwerkschnittstelleneinheit sind im Stand der Technik der EP 0 614 296 A2 beschrieben.

Fig. 2 zeigt eine lokale Netzwerkanordnung, die aus zwei lokalen ATM-Netzen I, II besteht. Jedes der Netze weist jeweils mehrere Stationen 1, 3, 4 bzw. 9, 10, 11 auf, die jeweils mit separaten Netzwerkschnittstelleneinheiten 5, 7, 8 bzw. 13, 14, 15 mit dem zugeordneten Netz verbunden sind. Beide Netze untereinander sind über miteinander gekoppelte Netzwerkschnittstelleneinheiten 6 bzw. 12 in Verbindung gebracht. Bei solchen gekoppelten Netzen kann die Übertragung der ATM-Zellen beispielsweise von einer Sendestation im Bereich des Netzes I zu einer Empfangsstation im Bereich des Netzes II erfolgen (oder umgekehrt).

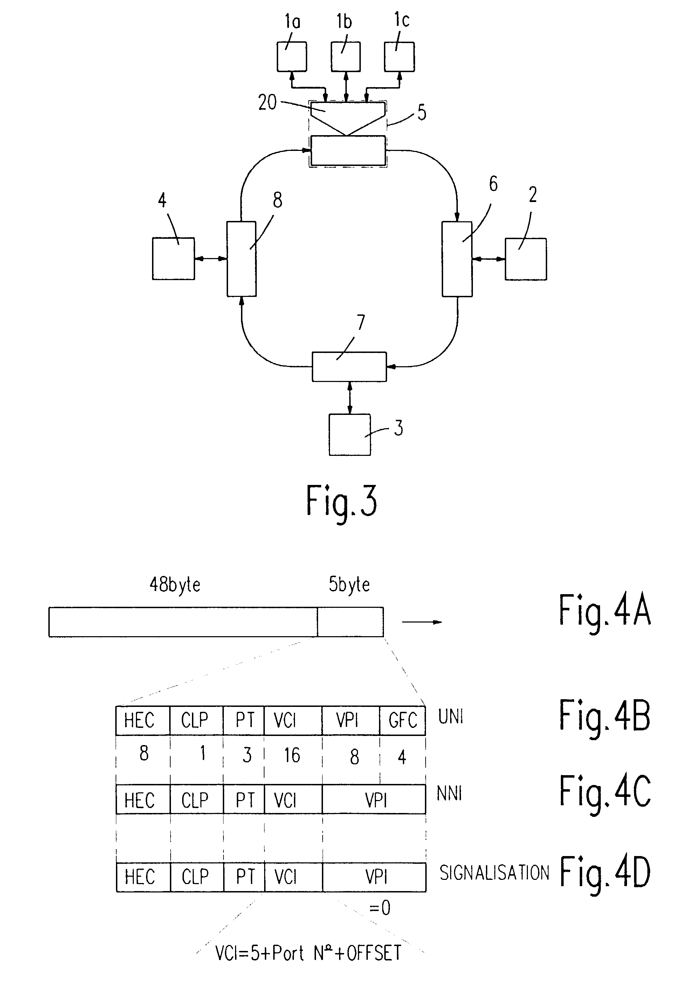

Fig. 3 zeigt den prinzipiellen Aufbau eines lokalen ATM-Netzes gemäß Ausführungsbeispiel der Erfindung. Im Unterschied zu den in Fig. 1 und 2 dargestellten Netzwerken sind an eine Netzwerkschnittstelleneinheit 5 mehrere Stationen 1a,1b,1c angeschlossen. Dazu ist die Netzwerkschnittstelleneinheit 5 um einen Multiplexer bzw. Demultiplexer 20 erweitert, der eine Einkopplung der ATM-Zellen aus den parallel an der Netzwerkschnittstelleneinheit 5 anliegenden Stationen 1a, 1b, 1c in die Netzwerkschnittstelleneinheit 5 ermöglicht. Umgekehrt werden die aus dem Netz am Empfangsringanschluß der Empfangseinrichtung der Netzwerkschnittstelleneinheit 5 erhaltenen ATM-Zellen in Demultiplexfunktion des Multiplexers/Demultiplexers 20 wiederum den gewünschten Stationen 1a, 1b, 1c zugeordnet. Auf diese Weise wird die Netzwerkschnittstelleneinheit 5 mit einem sog. Port Extender ausgerüstet, an den seiner Portzahl entsprechend mehrere Stationen 1a, 1b, 1c anschließbar sind. Der in Fig. 3 dargestellte Port Extender für die Netzwerkschnittstelleneinheit 5 ist in gleicher Weise auch realisierbar für jede andere Netzwerkschnittstelleneinheit. Auch ist die Vielfachheit eines jeden Port Extenders prinzipiell nicht begrenzt.

Ausgehend von den in den Figuren 1 bis 3 dargestellten prinzipiellen Aufbauweisen für ein lokales ATM-Netzwerk wird die Funktion der erfindungsgemäßen Lösung im folgenden erläutert:

Hierzu zeigt Fig. 4a zunächst den grundsätzlichen Aufbau einer ATM-Zelle, die gemäß dem Standard insgesamt aus 53 Bytes besteht, wobei 48 Bytes für die Übertragung der Information zur Verfügung stehen und 5 Bytes für die Übertragung von Managementdaten vorgesehen sind. Diese 5 Bytes bilden den sog. Zellenkopf (header), während die restlichen 48 Bytes die Nutzlast beinhalten (payload).

Fig. 4b zeigt die gemäß Standardisierung vorgesehene Struktur des Zellenkopfes für eine Zelle, die von einer Station zum Netzwerk (UNI, user network interface) übertragen wird. Die ersten 4 Bits werden durch die GFC-Funktion (generic flow control) gebildet, deren Funktion darin besteht, Überlastsituationen im Netz zu verhindern. Die anschließenden 8 Bits dienen der Definition des virtuellen Kanals (VPI).

Anschließend folgen 16 Bits für die Definition des virtuellen Kanals (VCI). Die nachfolgenden Bits in der Kopfzelle beziehen sich auf die Zellenart (PT, payload type), d.h. ihnen kann entnommen werden, ob es sich um eine Anwenderzelle oder um eine Managementzelle handelt. Weitere Bitfolgen beinhalten die Zellenverlustpriorität (CLP, cell loss priority) und die Zellenkopf-Prüfsumme (HEC, header error control).

Fig. 4c zeigt demgegenüber den Aufbau des Zellenkopfes für den Fall, daß die ATM-Zelle über eine Netzwerk-Netzwerkschnittstelleneinheit (NNI, network network interface) von einem ATM lokalen Netz zu einem anderen übertragen werden soll. In diesem Fall werden die ersten 4 Bits, die bei der UNI-Zelle für die GFC-Funktion reserviert sind, dem VPI-Bereich zugeschlagen, so daß VPI und VCI insgesamt eine Länge von 28 Bit erhalten.

Die oben beschriebenen Zellenstrukturen UNI bzw. NNI sind standardisiert.

Die von der jeweiligen Station 1a, 1b, 1c an dem durch den Port Extender gebildeten Eingang der Netzwerkschnittstelleneinheit 5 eintreffende ATM-Zelle weist, da sie dem standardisierten Bereich des ATM-Netzes zugeordnet ist, einen Aufbau entsprechend der UNI/NNI-Norm (vgl. Fig 4b) auf. Gemäß UNI Standard erfolgt die Signalisierung entlang eines permanent eingerichteten virtuellen Kanals mit standardisierten VPI & VCI Werten, wobei insbesondere VPI=0 und VCI=5 für sämtliche Stationen, die am Netzwerk angeschlossen sind, gilt.

Bei Netzwerken, wie sie in den Fig. 1 und 2 dargestellt sind, bei denen jeder Netzwerkschnittstelleneinheit stets genau eine Station zugeordnet ist, kann dieser Standard durchgängig eingehalten werden, da jede Station mit unterschiedlichen Netzwerkschnittstelleneinheiten in Verbindung steht.

Im folgenden wird erläutert, wie demgegenüber die Signalisierungsphase bei einem Netzwerk, wie es in Fig. 3 dargestellt ist, also mit einem Port Extender, abläuft:

Zunächst sei angenommen, daß UNI Signalisierungszellen von der Station an den Eingang des Port Extenders eintreffen. Sie enthalten alle die standardisierten Werte VPI=0, VCI=5 als Kennung. Bei deren Eintreffen wird jede UNI Signalisierungszelle, umgesetzt in Werte, die zwar unabgeändert VPI=0 haben, jedoch einen modifizierten VCI Wert gemäß der Formel VCI=5+PortNo+Offset aufweisen.

Gemäß dieser Wertemodifikation des VCI erhält die einzelne ATM-Zelle somit unterschiedliche VCI Werte für alle Stationen, die an dem Port Extender angeschlossen sind. Die Umsetzung eines jeden VCI Wertes erfolgt entsprechend der Nummer des zur jeweiligen Station gehörigen Ports. Der zusätzlich vorgesehene Offset bewirkt, daß die umgesetzten VCI Werte sich in einem nicht reservierten Bereich für alle Stationen befinden.

Nach der Umsetzung des VCI Wertes verläßt die Zelle den Port Extender und wird von der Steuereinrichtung (CPU) der Sende- und Empfangseinrichung empfangen. Dort findet die Reassemblierung statt, um die komplette Signalisierungsnachricht zu erhalten.

Umgekehrt erfolgt die Verarbeitung der ATM Zellen beim Ausgang aus der Netzwerkschnittstelleneinheit in Richtung Station wie folgt:

Wenn die UNI Verarbeitungseinheit der Netzwerkschnittstelleneinheit UNI Signalisierungsnachrichten an die an der Netzwerkschnittstelleneinheit angeschlossenen Stationen schicken will - z.B. eine Rufanforderung von einer entfernten angeordneten Station - können im Falle eines Netzwerkes gemäß Fig. 1 und 2 diese Signalisierungszellen im standardisierten UNI Format (VPI=0, VCI=5) gesendet und verarbeitet werden, weil jede Station direkt an die jeweilige Netzwerkschnittstelleneinheit angeschlossen ist.

Bei der modifizierten Netzwerkschnittstelleneinheit gemäß Fig. 3 können diese gemeinsamen VPI & VCI Werte für unterschiedliche an der Netzwerkschnittstelleneinheit angeschlossene Stationen nicht ohne die Gefahr von Zuordnungsproblemen verarbeitet werden. In diesem Fall ist nämlich ein Demultiplexvorgang im Port Extender für solche Signalisierungszellen, die gemeinsame VPI & VCI Werte haben, jedoch zu unterschiedlichen Stationen geleitet werden sollen, nicht möglich.

Zu diesem Zweck sendet die UNI Verarbeitungseinheit der Netzwerkschnittstelleneinheit jede UNI Signalisierungsnachricht mit wiederum modifiziertem VCI Wert nach der Zuordnung

$$VCI=5 + PortNo + Offset.$$

Auch hier entspricht die Angabe PortNo wiederum der Kennziffer des Ports, an dem die die Nachricht empfangende Station angeschlossen ist. Im Port Extender wird nun von dem VCI Wert der empfangenen ATM Zelle durch Abzug des Wertes 5+Offset vom erhaltenen VCI Wert die Kennziffer (PortNO) gewonnen. Aus dieser Angabe kann der Anschluß-Port ermittelt werden, für den die Signalisierungszelle bestimmt ist. Nach der Festlegung des Anschluß-Ports muß der VCI-Wert der empfangenen ATM Zelle wieder zu dem standardisierten VCI Wert VCI=5 zurückgesetzt werden, damit das im Bereich außerhalb des Port Extenders vorgeschriebene UNI Format eingehalten wird.

Es versteht sich, daß neben dem für den Wert VCI=5 beschriebenen Signalisierungsprozeß auch andere UNI standardisierte Aufgaben mit entsprechenden VCI Werten erfüllt werden können, beispielsweise Steuerungs- und Managementfunktionen.

**Patentansprüche**

1. Lokales, nach dem asynchronen Transfermodus (ATM) arbeitendes Netzwerk, insbesondere uni- oder bidirektionales Ringnetzwerk, mit mehreren Stationen (1-4) und diesen und/oder weiteren Netzwerken mit weiteren Stationen (9-11) zugeordneten Netzwerkschnittstelleneinheiten (5-8), die jeweils eine ATM-Sende- und Empfangseinrichtung (ATM-Transceiver) aufweisen, wobei der Verbindungsaufbau (Signalisierung) zwischen den Stationen über den Austausch von ATM-Zellen erfolgt, in deren Kopffeld (header) logische Verbindungskennungen (VPI, virtual path identifier und VCI, virtual channel identifier) niedergelegt sind,
   <u>dadurch gekennzeichnet,</u>
   daß mindestens eine Netzwerkschnittstelleneinheit (5) zusätzlich einen Multiplexer/Demultiplexer (20) aufweist, über welchen mindestens zwei Stationen (1a,1b,1c) gemeinsam an die Netzwerkschnittstelleneinheit (5) angeschlossen sind, und daß dem Multiplexer/Demultiplexer (20) Umsetzungsmittel zugeordnet sind zum reversiblen Umsetzen der Verbindungskennung (VPI- und/oder VCI-) in eine schnittstellenintern die einzelnen Stationen der Netzwerkschnittstelleneinheit unterscheidende Kennung.

2. Lokales, nach dem asynchronen Transfermodus (ATM) arbeitendes Netzwerk nach Anspruch 1,
   <u>dadurch gekennzeichnet,</u>
   daß jeder an die Netzwerkschnittstelleneinheit angeschlossenen Station ein unterschiedlicher Wert zugeordnet ist, um welchen die durch die Standardisierung (UNI) vorgegebene Verbindungskennung (VPI und/oder VCI) einer ATM-Zelle arithmetisch modifiziert wird.

3. Lokales, nach dem asynchronen Transfermodus (ATM) arbeitendes Netzwerk nach Anspruch 2,
   <u>dadurch gekennzeichnet,</u>
   daß die Zuordnung derart erfolgt, daß dem vom UNI-Format vorgegebenen VCI-Wert eine den Anschlußport der Station kennzeichnende Kennziffer hinzuaddiert wird.

4. Lokales, nach dem asynchronen Transfermodus (ATM) arbeitendes Netzwerknach Anspruch 3,
   <u>dadurch gekennzeichnet,</u>
   daß eine weitere konstante additive Größe (offset) der modifizierten VCI-Kennung hinzugefügt wird.

5. Netzwerkschnittstelleneinheit für ein lokales, nach dem asynchronen Transfermodus (ATM) arbeitendes Netzwerk, insbesondere uni- oder bidirektionales Ringnetzwerk, zur Verbindung des Netzwerkes mit einer oder mehreren Stationen (1-4) und/oder einer weiteren Netzwerkschnittstelleneinheit eines weiteren lokalen Netzwerkes, wobei die Netzwerkschnittstelleneinheit eine Sende-/Empfangseinrichtung (ATM-Transceiver) aufweist und wobei der Verbindungsaufbau (Signalisierung) zwischen den Stationen über den Austausch von ATM-Zellen erfolgt, in deren Kopffeld (header) logische Verbindungskennungen (VPI, virtual path identifier und VCI, virtual channel identifier) niedergelegt sind,
   <u>dadurch gekennzeichnet,</u>
   daß die Netzwerkschnittstelleneinheit (5) einen Multiplexer/Demultiplexer (20) aufweist, über welchen mindestens zwei Stationen (1a,1b,1c) gemeinsam an die Netzwerkschnittstelleneinheit (5) angeschlossen sind, und daß dem Multiplexer/Demultiplexer (20) Umsetzungsmittel zugeordnet sind zum reversiblen Umsetzen der Verbindungskennung (VPI- und/oder VCI) in eine schnittstellenintern die einzelnen Stationen der Netzwerkschnittstelleneinheit unterscheidende Kennung.

6. Verfahren zum Verbindungsaufbau in einem lokalen, nach dem asynchronen Transfermodus (ATM) arbeitenden Netzwerk, insbesondere uni- oder bidirektionalen Ringnetzwerk, mit mehreren Stationen (1-4) und diesen und/oder weiteren Netzwerken mit weiteren Stationen (9-11) zugeordneten Netzwerkschnittstelleneinheiten mit Sende- und Empfangseinrichtungen (ATM - Transceiver) (5-8), wobei der Verbindungsaufbau (Signalisierung) zwischen den Stationen über den Austausch von ATM-Zellen erfolgt, in deren Kopffeld (header) logische Verbindungskennungen (VPI, virtual path identifier und VCI, virtual channel identifier) niedergelegt sind,
   <u>dadurch gekennzeichnet,</u>
   daß bei einer Netzwerkschnittstelleneinheit (5), der mindestens zwei Stationen (1a,1b,1c) gemeinsam zugeordnet sind, die Verbindungskennung (VPI/VCI) mindestens teilweise und reversibel in eine die einzelnen Stationen der Netzwerkschnittstelleneinheit schnittstellenintern unterscheidende Kennung umgesetzt wird.

7. Verfahren nach Anspruch 8,
   <u>dadurch gekennzeichnet,</u>
   daß zum vom UNI Standard vorgegebenen Wert VCI=5 eine Kennziffer für die jeweilige Station hinzuaddiert wird.

8. Verfahren nach Anspruch 7,
   <u>dadurch gekennzeichnet,</u>
   daß die Kennziffer jeweils aus der Summe einer für jede Station unterschiedlichen Ziffer und einer Konstanten besteht.

9. ATM-Zelle zur Verwendung in einem uni- oder bidirektionalen Ringnetzwerk bestehend aus einem Kopffeld (header), in welchem eine vorgegebene Anzahl von Datenbytes für logische Verbindungskennungen (VPI, virtual path identifier und VCI, virtual channel identifier) enthalten sind, und einem Informationsfeld (payload), in dem eine weitere vorgegebene Anzahl von Datenbytes für die zu übertragene Nutzlast enthalten sind,
dadurch gekennzeichnet,
daß für die Signalisierung in einem Netzwerk, welches mindestens eine Netzwerkschnittstelleneinheit aufweist, der mindestens zwei Stationen gemeinsam zugeordnet sind, im Kopffeld der ATM-Zelle mindestens ein Teil der für die Verbindungskennung (VPI/VCI) belegten Datenbits schnittstellenintern für eine die Stationen unterscheidende Kennung modifiziert werden.

10. ATM-Zelle nach Anspruch 9,
dadurch gekennzeichnet,
daß die Verbindungskennung VCI=5 modifiziert wird zu einer Kennung VCI=5 + PortNo + Offset, wobei PortNo die Kennziffer des zur jeweiligen Station gehörigen Ports und Offset eine Konstante ist.

Fig.1

Fig.2

Fig.3

48byte      5byte

Fig.4A

| HEC | CLP | PT | VCI | VPI | GFC | UNI |
|------|------|-----|------|------|------|-----|
| 8 | 1 | 3 | 16 | 8 | 4 | |

Fig.4B

| HEC | CLP | PT | VCI | VPI | | NNI |
|------|------|-----|------|------|--|-----|

Fig.4C

| HEC | CLP | PT | VCI | VPI | | SIGNALISATION |
|------|------|-----|------|------|--|---------------|

Fig.4D

=0

VCI=5+Port N⁰+OFFSET

9